# EUROPEAN PATENT APPLICATION

(11) **EP 4 471 619 A1**
(43) Date of publication of application: **04.12.2024**
(21) Application number: 22918160.7
(22) Date of filing: 12.07.2022
(51) Int. Cl.: G06F 16/587

(54) **ROBOT MAPPING METHOD AND DEVICE, ROBOT, AND STORAGE MEDIUM**

(30) Priority: 04.01.2022 CN 202210006545
(71) Applicant: Beijing Roborock Innovation Technology Co., Ltd., Beijing 102206 (CN)
(72) Inventor: SONG, Jian, Beijing 102206 (CN); WANG, Lei, Beijing 102206 (CN)
(74) Representative: Michalski Hüttermann & Partner Patentanwälte mbB
(86) International application number: PCT/CN2022/105276
(87) International publication number: WO 2023/130704

(57) **Abstract**

Disclosed in embodiments of the present disclosure are a robot mapping method and device, a robot, and a storage medium. The robot mapping method comprises: controlling a robot to advance to a target point, the target point being a first exploration point in an area to be explored, and the first exploration point is in an unexplored state; in the process that the robot advances to the target point, detecting exploration point information corresponding to a preset range where the target point is located; processing the target point according to the exploration point information; and collecting mapping data of the area on the basis of the advancing of the robot to the target point so as to update an environment space map of the robot.

## Description

### CROSS-REFERENCE TO RELATED APPLICATION

This application is based on and claims priority to the Chinese Patent Application No. 202210006545.8 filed on January 4, 2022, the content of which is incorporated herein by reference in its entirety.

### TECHNICAL FIELD

The present disclosure relates to the field of robot map building, and in particular to a map building method and device for a robot, a robot, and a storage medium.

### BACKGROUND

With rapid developments of robotics and changing needs of society, autonomous mobile robots are receiving more and more attention from engineering and academic communities. In order for an autonomous mobile robot to autonomously help people accomplish daily life tasks in unstructured and non-deterministic environments, a relatively critical technology is to establish a map of an external environment represented inside the robot for subsequent navigation when the robot is in an unknown environment. However, a traditional map building method for the robot is to control the robot's movement manually or by using a keyboard or a joystick, which may be time-consuming, laborious and may result in wasted material resources when facing large and complex indoor environments. Therefore, it is of great significance for robots to achieve autonomous exploration and map building without manual control. On the one hand, human and material resources can be saved; and on the other hand, robots can make decisions on map building in real time according to environmental information sensed, collected and processed by the robots, thereby improving the autonomy and intelligence of the robots.

In the related art, a map of an entire space to be explored is built by moving a robot to different locations for Laser Distance Sensor (LDS) scanning. However, during the movement, if the map building has already been completed in a reachable target point region, there may still be a situation subsequently that the robot continues to move to this target point for map building, which prolongs a running time for map building process. For example, selecting the target point according to a distance first principle may cause the problem of continuous short-distance movement(s) within the same region, and scanning different locations in the same region by a plurality of movements separately results in prolonged map building time.

### SUMMARY

In view of the above, embodiments of the present disclosure provide a map building method and device for a robot, a robot, and a storage medium, which can shorten the running time for the map building process of the robot by optimizing selection of a target point.

An embodiment of a first aspect of the present disclosure provides a map building method for a robot, including:
controlling the robot to travel toward a target point, wherein the target point is a first exploration point of a region to be explored, and the first exploration point is in an unexplored state; detecting exploration point information corresponding to a preset range in which the target point is located during travelling of the robot toward the target point; processing the target point according to the exploration point information; and collecting, based on the robot travelling to the target point, map-building data of the region to be explored to update an environmental spatial map of the robot.

In some embodiments of the present disclosure, the step of processing the target point according to the exploration point information specifically includes:
maintaining the target point based on the exploration point information being that a second exploration point exists within the preset range; updating the target point to the second exploration point based on the exploration point information being that no second exploration point exists within the preset range and the second exploration point exists outside the preset range, wherein the second exploration point is a first exploration point other than the target point.

In some embodiments of the present disclosure, the map building method for the robot further includes:
controlling the robot to stop traveling based on the exploration point information being that no second exploration point exists in the region to be explored; and storing the environmental spatial map.

In some embodiments of the present disclosure, prior to the step of controlling the robot to travel toward the target point, the method further includes:
acquiring the environmental spatial map, wherein the environmental spatial map includes a known region and/or a region to be explored, and the known region has corresponding map-building data; extracting a plurality of boundary points of the region to be explored overlapping the known region; and determining a boundary point in an unexplored state as the first exploration point.

In some embodiments of the present disclosure, the map building method for the robot further includes:
based on there being a plurality of first exploration points in the region to be explored, sequentially connecting the plurality of first exploration points to acquire a connection line; determining a first distance between each of the first exploration points and a center point of the connection line; and determining a first exploration point corresponding to the smallest value of the first distance as the target point.

In some embodiments of the present disclosure, after the step of collecting the map-building data of the region to be explored, the method further includes:
updating the target point to be in an explored state.

In some embodiments of the present disclosure, the map building method for the robot further includes:
controlling, during travelling of the robot toward the target point, the robot to travel along an outer edge of an obstacle to bypass the obstacle based on presence of the obstacle between the target point and a current position of the robot.

An embodiment of a second aspect of the present disclosure provides a map building device for a robot, including:
a control module configured to control the robot to travel toward a target point, wherein the target point is a first exploration point of a region to be explored, and the first exploration point is in an unexplored state; a detection module configured to detect exploration point information corresponding to a preset range in which the target point is located during travelling of the robot toward the target point; a processing module configured to process the target point according to the exploration point information; and a map building module configured to collect, based on the robot travelling to the target point, map-building data of the region to be explored to update an environmental spatial map of the robot.

In some embodiments of the present disclosure, the processing module is specifically configured to: maintain the target point based on the exploration point information being that a second exploration point exists within the preset range, and update the target point to the second exploration point based on the exploration point information being that no second exploration point exists within the preset range and the second exploration point exists outside the preset range, wherein the second exploration point is a first exploration point other than the target point.

In some embodiments of the present disclosure, the control module is further configured to control the robot to stop traveling based on the exploration point information being that no second exploration point exists in the region to be explored. The map building device for the robot further includes a storage module configured to store the environmental spatial map.

In some embodiments of the present disclosure, the map building device for the robot further includes: an acquisition module configured to acquire the environmental spatial map, wherein the environmental spatial map includes a known region and/or a region to be explored, and the known region has corresponding map-building data; and an extraction module configured to extract a plurality of boundary points of the region to be explored overlapping the known region; and a first determination module configured to determine a boundary point in an unexplored state as the first exploration point.

In some embodiments of the present disclosure, the map building device for the robot further includes a second determination module configured to: based on there being a plurality of first exploration points in the region to be explored, sequentially connect the plurality of first exploration points to acquire a connection line; determine a first distance between each of the first exploration points and a center point of the connection line; and determine a first exploration point corresponding to the smallest value of the first distance as the target point.

In some embodiments of the present disclosure, the map building device for the robot further includes: a state updating module configured to update the target point to be in an explored state.

In some embodiments of the present disclosure, the control module is further configured to, during travelling of the robot toward the target point, control the robot to travel along an outer edge of an obstacle to bypass the obstacle based on presence of the obstacle between the target point and a current position of the robot.

An embodiment of a third aspect of the present disclosure provides a robot, including a processor and a memory. The memory is configured to store operation instructions; and the processor is configured to implement the aforesaid map building method for the robot according to any embodiment of the first aspect by invoking the operation instructions.

An embodiment of a fourth aspect of the present disclosure provides a storage medium storing computer programs thereon. When the computer programs are executed by a processor, the aforesaid map building method for the robot according to any embodiment of the first aspect is implemented.

In the map building method for the robot provided by the embodiments of the present disclosure, by optimizing the selection of the target point, the robot can complete the map building for a region with movement to fewer positions. In addition, other exploration point(s) around the target point can be monitored during the movement to prevent the situation that the map-building data of the position of the target point is collected repeatedly. Thus, the robot can complete the autonomous exploration and map building for unknown scenarios with fewer exploration times, higher exploration efficiency and shorter exploration time.

### BRIEF DESCRIPTION OF THE DRAWINGS

For clearer descriptions of the technical solutions in the embodiments of the present disclosure or related art, the following briefly introduces the accompanying drawings required for describing the embodiments or the related art. Apparently, the accompanying drawings in the following description show some embodiments of the present disclosure, and one of ordinary skill in the art may still obtain other drawings from these accompanying drawings without creative efforts.
FIG. 1 is a first structural diagram of a robot according to embodiments of the present disclosure;
FIG. 2 is a second structural diagram of a robot according to embodiments of the present disclosure;
FIG. 3 is a schematic flowchart of a map building method for a robot according to embodiments of the present disclosure;
FIG. 4 is a schematic block diagram of a map building device for a robot according to embodiments of the present disclosure; and
FIG. 5 is a schematic diagram of an electronic structure of a robot according to embodiments of the present disclosure.

### DETAILED DESCRIPTION

The embodiments of the present disclosure are described in detail below. Examples of the embodiments are shown in the accompanying drawings, in which the same or similar reference signs indicate the same or similar elements or elements having the same or similar functions. The embodiments described below with reference to the accompanying drawings are exemplary, and are intended to explain the present disclosure and should not be construed as a limitation to the present disclosure.

It will be appreciated by those skilled in the art that the singular forms "a", "an", "said" and "the" used herein may also include the plural forms, unless otherwise stated. It should be further understood that the term "including/comprising" as used in this specification of the present disclosure indicates the presence of stated features, integers, steps, operations, components and/or assemblies, but does not exclude the presence or addition of one or more other features, integers, steps, operations, components, assemblies and/or combinations thereof. It should be understood that when it is mentioned that an element is "connected to" or "connected with" another element, it may be directly connected to or connected with the other element, or there may be intermediate element(s). In addition, "connected to" or "connected with" as used herein may include a wireless connection or wireless bridging. The term "and/or" as used herein includes all or any one unit and all combinations of one or more associated listed items.

Example embodiments of the present disclosure will be described now in more detail with reference to the accompanying drawings. However, these example embodiments may be implemented in a variety of different forms and should not be construed as being limited to the embodiments set forth herein. It should be understood that these embodiments are provided to make the present disclosure thorough and complete and to fully communicate the ideas of these example embodiments to those of ordinary skill in the art.

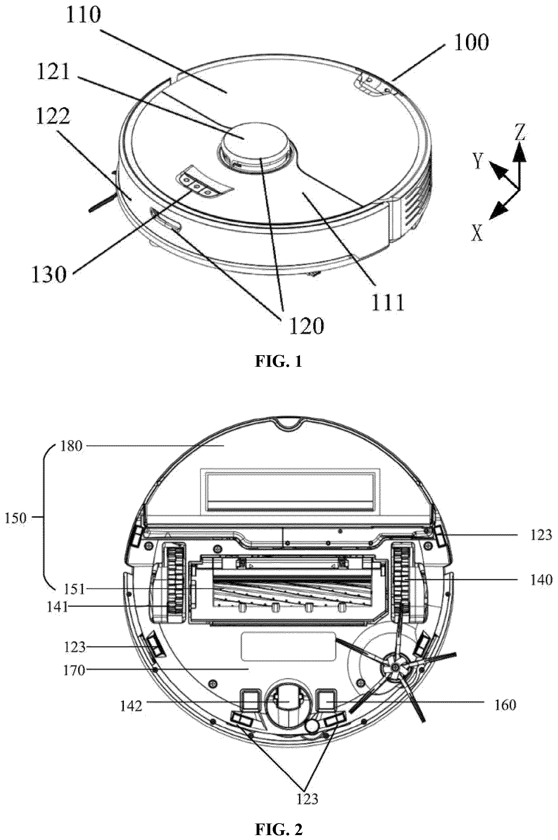

Embodiments of the present disclosure provide a possible application scenario that includes a robot. FIGs. 1 and 2 are schematic structural diagrams of a robot according to example embodiments of the present disclosure. As shown in FIGs. 1 and 2, the robot of the present disclosure may be a sweeping robot, a mopping robot, a vacuum washing robot, or the like. For ease of description, the technical solutions of the present disclosure are described in the embodiments by taking a situation where the robot is the sweeping robot as an example.

The robot may include a mobile platform 100, a perception system 120, a human-computer interaction system 130, a driving system 140, a cleaning module 150, an energy system 160, and a control system 170.

The mobile platform 100 may be configured to automatically move in a target direction on an operating surface. The operating surface may be a surface to be cleaned by the robot. In some embodiments, the sweeping robot works on a floor, in which case the floor is an operating surface.

In some embodiments, the mobile platform 100 may be an autonomous mobile platform or a non-autonomous mobile platform. The autonomous mobile platform means that the mobile platform 100 itself can automatically and adaptively make operational decisions according to unforeseen environmental inputs, while the non-autonomous mobile platform itself cannot adaptively make operational decisions according to unforeseen environmental inputs, but can execute given programs or run according to a certain logic. Accordingly, when the mobile platform 100 is the autonomous mobile platform, the target direction may be decided by the robot autonomously; and when the mobile platform 100 is the non-autonomous mobile platform, the target direction may be set manually or may be set by a system. When the mobile platform 100 is the autonomous mobile platform, the mobile platform 100 includes a forward portion 111 and a rearward portion 110.

The perception system 120 includes a position determining device 121 disposed on the mobile platform 100, a buffer 122 disposed on the forward portion 111 of the mobile platform 100, and sensing devices such as a cliff sensor 123, an ultrasonic sensor (not shown in the figures), an infrared sensor (not shown in the figures), a magnetometer (not shown in the figures), an accelerometer (not shown in the figures), a gyroscope (not shown in the figures), an odometer (not shown in the figures), or the like, which are disposed at the bottom of the mobile platform for providing to the control system 170 a variety of positional information and motion state information of the robot.

The position determining device 121 includes, but is not limited to, a camera, or a laser ranging device. The laser ranging device (e.g. LDS) may measure events (or objects) within a measurement height range above the robot. The measurement height range may for example be set to a range of 8-10 centimeters above the robot.

In order to more clearly describe behaviors of the robot, the following directions are defined. The robot may travel on the floor through various combinations of movement relative to the following three perpendicular axes defined by the mobile platform 100: a transverse axis x, a forward-rearward axis y, and a center vertical axis z. The forward driving direction along the forward-rearward axis y is labeled as a "forward direction", and the rearward driving direction along the forward-rearward axis y is labeled as a "rearward direction". The transverse axis x essentially extends between right and left wheels of the robot along an axis center defined by a center point of a driving wheel assembly 141, where the robot may rotate around the axis x. It is called "pitch up" when the forward portion of the robot is tilted upward and the rearward portion thereof is tilted downward, and it is called "pitch down" when the forward portion of the robot is tilted downward and the rearward portion of the robot is tilted upward. In addition, the robot can rotate around the axis z. In the forward direction of the robot, it is called "turn right" when the robot tilted to the right of the axis y and it is called "turn left" when the robot is tilted to the left of the axis y.

As shown in FIG. 2, the cliff sensor 123 is provided at the bottom of the mobile platform 100 and in front and rear of the driving wheel assembly 141. The cliff sensor 123 is configured to prevent the robot from falling off when the robot moves rearward, thereby preventing the robot from being damaged. The aforementioned "forward" refers to the side in the same direction as the traveling direction of the robot, and the aforementioned "rearward" refers to the side in a direction opposite to the travelling direction of the robot.

The components of the perception system 120 can operate independently or together to more accurately achieve an intended function. The surface to be cleaned is identified by the cliff sensor 123 and the ultrasonic sensor to determine the physical properties of the surface to be cleaned, including the surface material, the degree of cleanliness, or the like, and more accurate determination may be made in combination with the camera, or the laser ranging device, or the like.

For example, whether the surface to be cleaned is a carpet can be determined by the ultrasonic sensor, and if the ultrasonic sensor determines that the surface to be cleaned is of the carpet material, the control system 170 controls the robot to carry out carpet-mode cleaning.

The buffer 122 is disposed on the forward portion 111 of the mobile platform 100. When the driving wheel assembly 141 propels the robot to travel on the floor during cleaning, the buffer 122 detects one or more events (or objects) in a traveling path of the robot via a sensor system, such as an infrared sensor. The robot can, according to the event (or object) such as an obstacle or a wall, detected by the buffer 122, control the driving wheel assembly 141 to cause the robot to make responses to the event (or object), e.g., moving away from the obstacle, crossing the obstacle, etc.

In example embodiments of the present disclosure, an obstacle detecting device of the robot may include the buffer 122, or the infrared sensor, or the like. The obstacle detecting device may be configured to detect whether a first obstacle exists between a current position of the robot and a traveling target position of the robot.

The height of the first obstacle herein is less than the measurement height range of the robot.

The control system 170 is provided on a main circuit board within the mobile platform 100 and includes a computing processor, such as a central processing unit or an application processor, in communication with a non-transitory memory, such as a hard disk, a flash memory, a random access memory, or the like. The application processor is configured to receive environmental information sensed by the plurality of sensors and transmitted from the perception system 120, draw a simultaneous map of an environment where the robot is located by using a localization algorithm such as Simultaneous Localization And Mapping (SLAM) according to obstacle information and so on fed back by the laser ranging device, autonomously determine a traveling path according to the environmental information and the environmental map and then control the driving system 140 to perform operations (such as moving forward, moving rearward, and/or turning) according to the autonomously determined traveling path. Further, the control system 170 may also, according to the environmental information and environmental map, determine whether to start the cleaning module 150 to carry out a cleaning operation.

Specifically, the control system 170 may comprehensively determine what kind of working state the sweeping robot is currently in, such as crossing doorsill, getting on a carpet, being located at a cliff, the upper portion being stuck or the lower portion being stuck, having a full dust box, being picked up, and so on, according to distance information or speed information fed back by the buffer 122, and sensing device such as the cliff sensor 123, the ultrasonic sensor, the infrared sensor, the magnetometer, the accelerometer, the gyroscope, the odometer, and the like, and may also give specific next action strategies for different situations, making the robot work more in line with the owner's requirements and achieving better user experience. Further, the control system 170 can plan the most efficient and reasonable operation path and operation mode based on information about the simultaneous map drawn by the SLAM, thereby greatly improving the operation efficiency of the robot.

In example embodiments of the present disclosure, a map building device for the robot may include the control system 170. The map building device for the robot may be configured to: control the robot to travel toward a target point; detect exploration point information within a preset range in which the target point is located during travelling of the robot toward the target point; process the target point according to the exploration point information; and collect, based on the robot travelling to the target point, map-building data of the region to be explored to update an environmental spatial map of the robot.

The driving system 140 may control the robot to travel across the floor by executing drive commands based on specific distance and angle information, such as x, y, and components. To enable the robot to move more stably on the floor or have a stronger movement ability, the robot may include one or more steering assemblies 142. The steering assembly 142 may be a driven wheel or a driving wheel, the structure form of which may include but not limited to, a universal wheel, and the steering assembly 142 may be located in front of the driving wheel assembly 141.

The driving wheel assembly 141 may be detachably connected to the mobile platform 100 and thus this is convenient for assembly and detachment and maintenance. The driving wheel may have a biased drop suspension system, which is movably fastened, for example, rotatably attached to the mobile platform 100 of the robot, and maintain contact and traction with the floor with a certain floor-grabbing force by an elastic element, such as a tensile spring or a compression spring. Meanwhile, the cleaning module 150 of the robot also contacts the surface to be cleaned with a certain pressure. The cleaning module 150 may include a dry cleaning module 151 and/or a wet cleaning module 180.

The energy system 160 includes rechargeable batteries, such as nickel-hydrogen batteries and lithium batteries. A rechargeable battery may be connected to a charging control circuit, a battery pack charging temperature detecting circuit, and a battery undervoltage monitoring circuit. The charging control circuit, the battery pack charging temperature detecting circuit, and the battery undervoltage monitoring circuit are then connected to a single-chip microcomputer control circuit. A host is connected to a charging pile via a charging electrode provided on a side of or below the body of the robot for charging. If there is dust on the exposed charging electrode, due to the accumulative effect of charges during the charging, a plastic body around the electrode may be melted and deformed and the electrode itself may even be deformed, and thus normal charging cannot be continued.

The human-computer interaction system 130 includes buttons on a host panel for a user to select functions and may further include a display screen and/or an indicator light and/or a speaker. The display screen, the indicator light, and the speaker show the user the function options or the current state that the robot is in; and the human-computer interaction system 130 may further include a mobile phone client program.

It should be noted that, in the example embodiments of the present disclosure, a map building method for a robot described below may be implemented by a robot (e.g., a sweeping robot, a mopping robot, etc.). That is, various steps in the map building method for the robot may be performed by the robot, in which case the map building device for the robot may be configured in the robot.

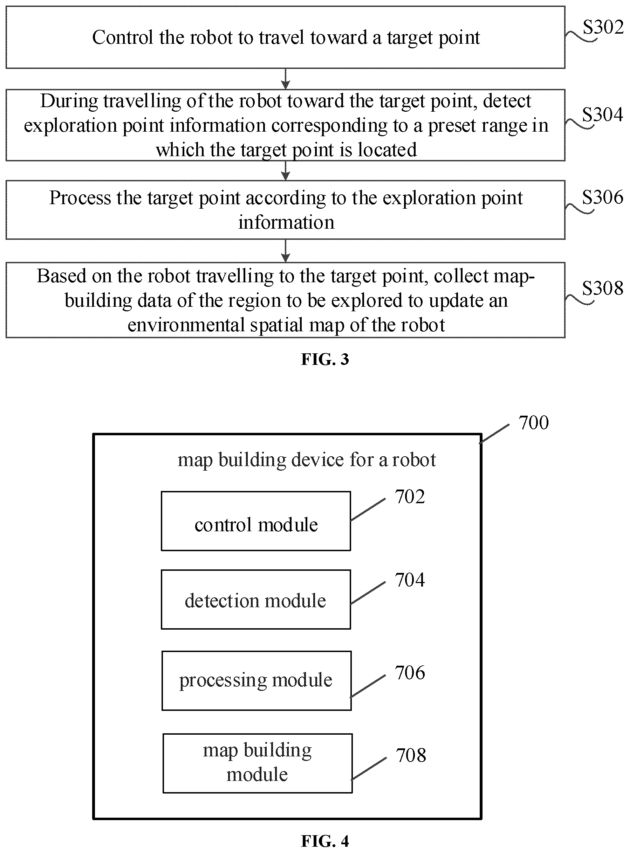

As shown in FIG. 3, an embodiment of the present disclosure provides a map building method for a robot. The method includes following method steps.

In step S302, the robot is controlled to travel toward a target point.

The target point is a first exploration point of a region to be explored, and the first exploration point is in an unexplored state. That is, the target point is a location, where the robot has not collected map-building data, in the region to be explored on an environmental spatial map. Thus, when performing selection of the target point, a location where the data has been collected can be avoided, thereby avoiding unnecessary work of the robot, effectively reducing the number of exploration times of the robot, and greatly shortening the map building time. It is to be understood that the first exploration point has corresponding coordinates. After the robot enters a map building mode, the robot is able to perform navigation through the position of the coordinates and thus move to the position of the target point that needs to be explored.

Further, a boundary point of the region to be explored overlapping a known region on an environmental spatial map may be taken as the first exploration point, which not only ensures that a larger area can be covered during scanning of the map-building data, but also prevents local regions from being omitted when performing exploration, so as to achieve a better map building effect.

More specifically, there may be one or more first exploration points, and the number of first exploration points is related to the size of the unexplored region. In the case where there is a plurality of first exploration points, it is needed to select one of the plurality of first exploration points as the target point.

In step S304, during travelling of the robot toward the target point, exploration point information corresponding to a preset range in which the target point is located is detected.

The preset range may be centered on the target point and reasonably set according to the scanning region of the robot. The scanning region is a range in which the robot can collect the map-building data at the target point, such as the visual range of a camera device of the robot.

In step S306, the target point is processed according to the exploration point information.

In this embodiment, considering that the robot is capable of collecting data for a complete scanning region, when the robot collects data at two first exploration points in close proximity, at least part of the region may be scanned repeatedly, which may prolong the map building time and is not conducive to improving the map building efficiency. To this end, during travelling of the robot toward the target point, the exploration point information corresponding to the preset range is periodically detected in accordance with a preset time interval. The setting of the preset time interval is related to the speed at which the robot travels or the environment in which the robot travels. The exploration point information is configured to indicate whether a first exploration point other than the target point exists within the preset range, and whether a first exploration point other than the target point exists outside the preset range. After the exploration point information is detected, the target point is changed in time according to the exploration point information. Thus, the technical solution can enable the robot to complete the map building for the region with movement to fewer positions, and meanwhile also prevent the data of the scannable region for the target point from being collected repeatedly, thereby completing the autonomous exploration and map building for the unknown scenarios with fewer times of exploration, higher exploration efficiency and shorter exploration time.

In step S308, based on the robot travelling to the target point, map-building data of the region to be explored is collected to update an environmental spatial map of the robot.

In this embodiment, when the robot arrives at the target point, a data collection device of the robot is activated to collect map-building data of the region scannable by the robot at the position of the target point, and the map-building data is utilized to expand the environmental spatial map.

In a specific implementation, when the robot carries out autonomous exploration in an unknown environment, the localization and map building are carried out based on the Simultaneous Localization And Mapping (SLAM) algorithm through the movement and measurement of the map building robot. More specifically, laser data and odometer data are first collected to estimate a pose of the robot. Then, an environmental map is constructed, and the pose of the robot is corrected based on the constructed map, thereby constructing an accurate map model. It will be appreciated that the environmental spatial map model may be a raster map. The raster map can acquire the occupancy state of the environment directly from distance information of sensor(s), and provide detailed environmental feature data, which is thus suitable for the spatial representation of an unstructured environment, and is an important basis for navigation and path planning of the robot. Each grid in the raster map has three states: an idle state, an occupied state, and an unknown state. The idle state indicates that there is no obstacle at the grid, the occupied state indicates that there is an obstacle at the grid, and the unknown state indicates that the grid has not yet been perceived by the robot and belongs to an environment to be explored.

Further, after the step of collecting the map-building data of the region to be explored, the target point is updated to be in the explored state. Thus, the target point is eliminated from the first exploration point(s), which can avoid the problem that certain point is selected repeatedly when selection of a next point is performed, and this is conducive to increasing the point selection speed, thereby preventing the unnecessary work of the robot, and shortening the overall running time during the map building process.

In some implementable embodiments provided in the present disclosure, the step of processing the target point according to the exploration point information specifically includes following steps:
In step S306-1, the target point is maintained based on the exploration point information being that a second exploration point exists within the preset range.
In step S306-2, the target point is updated to the second exploration point based on the exploration point information being that no second exploration point exists within the preset range and the second exploration point exists outside the preset range.

The second exploration point is a first exploration point other than the target point.

In this embodiment, it is detected that a second exploration point exists within the preset range, i.e., there is a first exploration point within the preset range that has not yet been subjected to data collection, or in other words, the robot has not performed scanning at different locations in the same region. In this case, the target point may be maintained unchanged so that the robot continues to travel in accordance with the determined target point until it reaches the target point to complete the data collection at the target point.

If it is detected that there is no second exploration point within the preset range, i.e., there is no unexplored point around the target point, it means that the robot may have already collected the map-building data corresponding to the target point when it performs exploration at other exploration points. In this case, there is no need for the robot to move to the currently determined target point, the robot stops moving and finds a next new target point, and then the robot is controlled to travel to the new target point. In other words, the target point is updated according to the second exploration point outside the preset range, i.e., the other unexplored first exploration point(s) in the region to be explored, and the destination for data collection by the robot is changed in time, so that the robot is able to travel toward the updated target point. In this way, continuous short-distance movement in the same region can be avoided, which increases the map building speed and achieves the autonomous exploration and map building for unknown scenarios with fewer exploration times, higher exploration efficiency and shorter exploration time, thereby improving the autonomy and intelligence of the robot in completion of the map building.

It can be understood that the robot does not need to perform data collection again at the currently determined target point in the case where it is determined that there is no second exploration point within the preset range, i.e., the region around the currently determined target point has already been sufficiently scanned. In this case, it may be approximated that the target point has already been explored, and in order to avoid the point from being selected repeatedly, the state of the target point before updating may be changed to the explored state. That is, the target point before updating may be eliminated from the first exploration point(s), and then the update of the target point may be carried out afterwards.

It is noted that in the process in which the robot is controlled to travel toward the updated target point, information about exploration point(s) in the preset range associated with the updated target point may also be redetected. If the exploration point information still indicates that no second exploration point exists within the preset range and a second exploration point exists outside the preset range, the update of the target point is continued until data collection is completed.

In some implementable embodiments of the present disclosure, the map building method for the robot further includes following steps.

In step S310, the robot is controlled to stop traveling based on the exploration point information being that no second exploration point exists in the region to be explored.

In step S312, the environmental spatial map is stored.

In this embodiment, it is detected that no second exploration point exists in the region to be explored, i.e., there is no second exploration point in the preset range and outside the preset range, or in other words, no first exploration point that has not been explored exists within the region to be explored. In this case, it is confirmed that the map building has been completed, and the robot is directly controlled to stop exploring and traveling. Meanwhile, the final environmental spatial map is stored for subsequent use. Thus, unnecessary work of the robot during exploration is prevented, the time required for exploration is shortened, and the autonomous exploration efficiency is improved.

It is to be noted that a region within the preset range and a region outside the preset range together constitute the region to be explored.

Exemplarily, when it is determined that no second exploration point exists within the preset range, the following three situations may occur.
(i) There is no second exploration point outside the preset range, i.e., there is no unexplored first exploration point in the unexplored region. In other words, the robot completes autonomous exploration on the environment spatial map and map building is completed. At this time, the robot is controlled to stop exploration, save the built environmental spatial map, exit the map-building mode, and output exploration completion information.
(ii) One and only one second exploration point exists outside the preset range, In this case, the robot is controlled to travel by taking the only one second exploration point as the new target point. After the robot completes the collection of map-building data at the second exploration point, it can be determined that there is no unexplored point, and the robot can save the built environmental spatial map, exit the map-building mode, and output the exploration completion information.
(c) There are a plurality of second exploration points outside the preset range. In the case, selection of the plurality of second exploration points is further performed according to a preset rule, so as to select an optimal second exploration point to update the target point, and then the robot is controlled to travel according to the updated target point. Specifically, the preset rule is used to select one second exploration point from the plurality of second exploration points, and may be reasonably set in accordance with exploration needs. For example, the preset rule is defined as selecting a second exploration point closest to the current position of the robot to shorten the time required for the robot to travel; or, the preset rule is defined as selecting a second exploration point closest to the current target point, so as to avoid continuous short-distance movement of the robot in the same region as much as possible; or, the preset rule is defined as an obstacle or the like between the robot and the second exploration point. Embodiments of the present disclosure do not specifically limit the preset rule.

In some implementable embodiments provided by the present disclosure, prior to the step of controlling the robot to travel toward the target point, the method further includes following steps.

In step S402, the environmental spatial map is acquired.

The environmental spatial map includes a known region and/or a region to be explored, and there is map-building data corresponding to the known region. The environmental spatial map may be acquired by information transmission between a control terminal and the robot, or may be created by the robot itself or retrieved from a built-in memory of the robot.

Further, in the case where the environmental spatial map is acquired through the information transmission between the control terminal and the robot, if it is detected that regions included in the environmental spatial map are all known regions, there is no need to perform exploration, and at the same time, prompt information is sent to the control terminal to avoid miscommunication of the map.

In step S404, a plurality of boundary points of the region to be explored overlapping the known region is extracted.

Exemplarily, the boundary points between known and unexplored regions in a local raster map are extracted by image segmentation technique(s) based on a frontier-based exploration algorithm.

It should be noted that a boundary point is defined as a coordinate point at the junction of open (known) and unknown places in the map, i.e., the boundary of the region not scanned by a laser radar.

Further, when the robot performs exploration for the first time and an environmental space where the robot is located is the region to be explored, the first data collection is performed with the current position of the robot as the target point in order to form an environmental spatial map in which the known region and the region to be explored coexist, and then the boundary algorithm is utilized to continue with the map building for the region to be explored.

In step S406, a boundary point in an unexplored state is determined as the first exploration point.

In this embodiment, all boundary points adjacent to the known region are first extracted on the environmental spatial map to be explored, and through the state identification, boundary point(s) that have(has) not been explored are(is) selected from all the boundary points as the first exploration point(s). The robot is controlled to detect the region to be explored from the optimal boundary point (target) and expand the raster map. Thus, the automatic point selection can be achieved in the process of map building without manual operation, which saves manpower and achieves the purpose of autonomous map building by the robot. Moreover, when the target point is selected, the situation of collecting data from the same coordinates for many times can be avoided, which greatly improves the map building efficiency.

In some implementable embodiments provided in the present disclosure, the map building method for the robot further includes following steps:
In step S502, based on there being a plurality of first exploration points in the region to be explored, the plurality of first exploration points are sequentially collected to acquire a connection line.
In step S504, first distance between each of the first exploration points and a center point of the connection line is determined.
In step S506, a first exploration point corresponding to the smallest value of the first distance is determined as the target point.

In this embodiment, if a plurality of first exploration points, i.e., a plurality of unexplored boundary points, exist within the region to be explored, the plurality of first exploration points are connected sequentially to form a connection line. In order to cover a larger area during scanning and achieve a better map building effect, the first distance between each first exploration point and the center point of the connection line is calculated, and a first exploration point corresponding to the smallest value of the first distance is the first exploration point that is closest to the center point, and the first exploration point is then taken as the target point for exploration.

As a specific example, when performing selection of the target point, all points in the map are checked in turn, and after first exploration point(s) that meets(meet) the condition (the first exploration point(s) is(are) adjacent to the known area and unexplored) is(are) found, since a laser distance sensor emits laser light in a straight line and all the boundary points seem like a straight line in shape on the whole, the center of a line segment composed of a plurality of first exploration points is selected as the target point as far as possible. If no target point can be found, map building is completed. When the robot moves toward the target point, whether unchecked first exploration points exist around the target point is regularly checked, and if there are no such points anymore, the robot does not need to move to the current target point, stops moving, finds the next target point, and moves toward the new target point until there are no valid target points, such that map building of the region is completed. If the unchecked first exploration point(s) exist(exists), the robot continues to move to the current target point, and after completing the data collection for the current target point, the robot continues to find the next target point. As a result, the robot can complete the map building for the region with movement to fewer positions, and meanwhile the overall running time for the map building procedure is shortened.

In some implementable embodiments of the present disclosure, the map building method for the robot further includes the following step:
In step S602, during travelling of the robot toward the target point, the robot is controlled to travel along an outer edge of an obstacle to bypass the obstacle based on presence of the obstacle between the target point and a current position of the robot.

In this embodiment, during the traveling of the robot, if an obstacle is detected between the current position of the robot and the target point, the robot is controlled to travel along the outer edge of the obstacle in order to bypass the obstacle and reach the traveling target point, which can avoid the satiation that the robot stops running due to the obstacle, increases the continuity of the robot's work, and meanwhile improves the robot's operation efficiency.

Further, the step of controlling the robot to travel along the outer edge of the obstacle specifically includes: in the case where a second distance between the current position of the robot and the obstacle is less than a distance threshold, controlling the robot to deflect by a preset angle and to advance in a direction away from the obstacle; and in a case where a third distance between the current position of the robot and the obstacle after advancing is greater than the distance threshold, controlling the robot to deflect in an opposite direction by the preset angle and to travel in a direction close to the first obstacle. The preset angle may refer to an angle at which the robot adjusts the travel direction during the traveling.

It should be noted that the distance threshold may be set to be different for different detection methods.

As shown in FIG. 4, an embodiment of a second aspect of the present disclosure provides a map building device 700 for a robot. The map building device 700 may include a control module 702, a detection module 704, a processing module 706, and a map building module 708.

The control module 702 is configured to control the robot to travel toward a target point, wherein the target point is a first exploration point of a region to be explored, and the first exploration point is in an unexplored state. The detection module 704 is configured to detect information about exploration point(s) within a preset range in which the target point is located during travelling of the robot toward the target point. The processing module 706 is configured to process the target point according to the exploration point information. The map building module 708 is configured to, based on the robot travelling to the target point, collect map-building data of the region to be explored to update an environmental spatial map of the robot.

As an example, the processing module 706 is specifically configured to: maintain the target point based on the exploration point information being that a second exploration point exists within the preset range, and update the target point to the second exploration point based on the exploration point information being that no second exploration point exists within the preset range and the second exploration point exists outside the preset range, wherein the second exploration point is a first exploration point other than the target point.

As an example, the control module 702 is further configured to control the robot to stop traveling based on the exploration point information being that no second exploration point exists in the region to be explored. The map building device 700 for the robot further includes a storage module (not shown) configured to store the environmental spatial map.

As an example, the map building device 700 for the robot further includes: an acquisition module (not shown) configured to acquire the environmental spatial map, wherein the environmental spatial map includes a known region and/or a region to be explored, and there is map-building data corresponding to the known region; an extraction module (not shown) configured to extract a plurality of boundary points of the region to be explored overlapping the known region; and a first determination module (not shown) configured to determine a boundary points in an unexplored state as the first exploration point.

As an example, the map building device 700 for the robot further includes a second determination module (not shown) configured to: based on there being a plurality of first exploration points in the region to be explored, sequentially connect the plurality of first exploration points to acquire a connection line; determine a first distance between each of the first exploration points and a center point of the connection line; and determine a first exploration point corresponding to the smallest value of the first distance as the target point.

As an example, the map building device 700 for the robot further includes: a state updating module (not shown) configured to update the target point to be in an explored state.

As an example, the control module 702 is further configured to, during travelling of the robot toward the target point, control the robot to travel along an outer edge of an obstacle to bypass the obstacle based on presence of the obstacle between the target point and a current position of the robot.

An embodiment of a third aspect of the present disclosure provides a robot, including a processor and a memory. The memory stores computer program instructions executable by the processor. When the computer program instructions are executed by the processor, the steps of the map building method for the robot according to any embodiment are implemented.

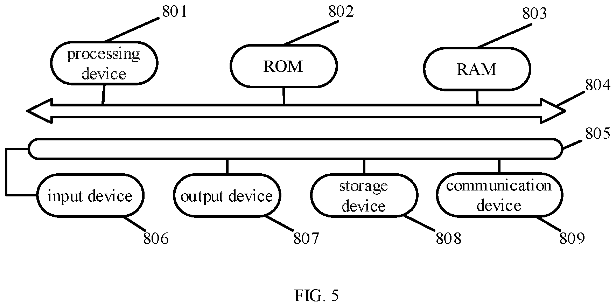

As shown in FIG. 5, the robot may include a processing device 801 (e.g., a central processor, a graphics processor, etc.) that may perform a variety of appropriate actions and processing based on a program stored in a read-only memory (ROM 802) or a program loaded from a storage device 808 into a random access memory (RAM 803). The RAM 803 further stores various programs and data required for the operation of an electronic robot. The processing device 801, the ROM 802, and the RAM 803 are connected to each other via a bus 804. An input/output (I/O) interface is also connected to the bus 804.

Typically, the following devices may be connected to the I/O interface 805: an input device 806 including, for example, a touch screen, a touch pad, a keyboard, a mouse, a camera, a microphone, an accelerometer, a gyroscope, and the like; an output device 807 including, for example, a liquid crystal display (LCD), a loudspeaker, a vibrator, and the like; a storage device 808 including, for example, a hard disk and the like; and a communication device 809. The communication device 809 may allow the electronic robot to communicate wirelessly or wiredly with other robot(s) to exchange data. Although FIG. 1 and FIG. 2 illustrate the electronic robot with various devices, it should be understood that it is not required for the robot to implement or have all of the illustrated devices; and alternatively, more or fewer devices may be implemented or provided.

In particular, according to the embodiments of the present disclosure, the processes described above with reference to the flowchart may be implemented as a robot software program. For example, an embodiment of the present disclosure includes a robot software program product including a computer program carried on a readable medium, and the computer program includes a program code for performing the method shown in the flowchart of FIG. 4. In such an embodiment, the computer program may be downloaded and installed from a network via the communication device 809, or installed from the storage device 808, or installed from the ROM 802. When the computer program is executed by the processing device 801, the aforesaid functions as defined in the methods according to embodiments of the present disclosure are implemented.

It should be noted that the readable medium as stated above in the present disclosure may be a computer-readable signal medium or a computer-readable storage medium or any combination thereof. The computer-readable storage medium may be, for example, but not limited to, an electrical, magnetic, optical, electromagnetic, infrared, or semiconductor system, device or apparatus, or any combination thereof. More specific examples of the computer-readable storage medium may include, but are not limited to: an electrical connection with one or more conducting wires, a portable computer disk, a hard disk, a random access memory (RAM 803), a read-only memory (ROM 802), an erasable programmable read-only memory (EPROM 802 or flash memory), an optical fiber, a portable compact disk read-only memory (CD-ROM 802), an optical storage device, a magnetic storage device, or any suitable combination thereof.

An embodiment of a fourth aspect of the present disclosure provides a storage medium storing computer program instructions therein. When the computer program instructions are invoked and executed by a processor, steps of the map building method for the robot according to any one of the aforesaid embodiments are implemented.

In the present disclosure, the storage medium may be any tangible medium that includes or stores a program, and the program may be adopted by or in combination with an instruction executing system, device or apparatus. In addition, in the present disclosure, a computer-readable signal medium may include a data signal propagated in a baseband or as part of a carrier wave that carries a computer-readable program code. The data signal as propagated may take a variety of forms, including but not limited to an electromagnetic signal, an optical signal, or any suitable combination thereof. The computer-readable signal medium may also be any readable medium other than the storage medium and may send, propagate, or transmit the program adopted by or in combination with the instruction executing system, device or apparatus. The program code included in the readable medium may be transmitted via any suitable medium, including but not limited to a wire, an optical cable, a radio frequency (RF), etc., or any suitable combination thereof.

The above readable medium may be included in the robot described above, or may exist alone and not assembled into the robot.

A computer program code for performing the operations of the present disclosure may be written in one or more programming languages or a combination thereof. The programming languages include, but are not limited to, object-oriented programming languages such as Java, Small talk, or C++, and conventional procedural programming languages such as the "C" language or the like may also be included. The program code may be executed entirely on a user's computer, partially on the user's computer, as a stand-alone software package, partially on the user's computer and partially on a remote computer, or entirely on the remote computer or a server.

In a case of involving the remote computer, the remote computer may be connected to the user's computer over any kind of network which includes a local area network (LAN) or a wide area network (WAN), or may be connected to an external computer (e.g., via the Internet from an Internet service provider).

The flowcharts and block diagrams in the accompanying drawings illustrate the architecture, functions, and operations as possibly implemented by the system, method, and computer program product according to various embodiments of the present disclosure. At this point, each block in the flowchart or block diagram may represent a module, a program segment, or a portion of a code, and the module, the program segment, or the portion of the code includes one or more executable instructions for implementing a prescribed logical function. It should also be noted that, in some alternative embodiments, the functions indicated in the blocks may also occur in an order different from the order indicated in the accompanying drawings. For example, two blocks represented in succession may actually be executed in substantially parallel, and they may sometimes be executed in an opposite order depending on the function as involved. It should be noted that each block in the block diagram and/or flowchart and the combination of blocks in the block diagram and/or flowchart may be implemented with a dedicated hardware-based system that performs the specified function(s) or operation(s), or may be implemented with a combination of dedicated hardware and computer instructions.

The aforesaid device embodiments are merely exemplary. The units described as separate components may or may not be physically separate, and the components displayed as units may or may not be physical units. That is, they may be located in one position, or may be distributed over multiple network units. Some or all of the modules may be selected according to actual needs to achieve the purpose of the solution of the embodiments, which can be understood and implemented by those of ordinary skill in the art without inventive efforts.

Finally, it should be noted that the above embodiments are only used to illustrate the technical solutions of the present disclosure and are not intended to limit the present disclosure. Although the present disclosure has been described in detail with reference to the foregoing embodiments, those of ordinary skill in the art should understand that, they can still make modifications to the technical solutions described in the foregoing embodiments or make equivalent substitutions to some of the technical features; and these modifications or substitutions do not make the essence of the corresponding technical solutions deviate from the spirit and scope of the technical solutions of the various embodiments of the present disclosure.

## Claims

1. A map building method for a robot, comprising:
controlling the robot to travel toward a target point, wherein the target point is a first exploration point of a region to be explored, and the first exploration point is in an unexplored state;
detecting exploration point information corresponding to a preset range in which the target point is located during travelling of the robot toward the target point;
processing the target point according to the exploration point information; and
collecting, based on the robot travelling to the target point, map-building data of the region to be explored to update an environmental spatial map of the robot.

2. The map building method for the robot according to claim 1, wherein the step of processing the target point according to the exploration point information specifically comprises:
maintaining the target point based on the exploration point information being that a second exploration point exists within the preset range; and
updating the target point to the second exploration point based on the exploration point information being that no second exploration point exists within the preset range and the second exploration point exists outside the preset range,
wherein the second exploration point is a first exploration point other than the target point.

3. The map building method for the robot according to claim 2, further comprising:
controlling the robot to stop traveling based on no second exploration point existing in the region to be explored; and
storing the environmental spatial map.

4. The map building method for the robot according to claim 1, wherein prior to the step of controlling the robot to travel toward the target point, the method further comprises:
acquiring the environmental spatial map, wherein the environmental spatial map comprises a known region and/or a region to be explored, and the known region has corresponding map-building data;
extracting a plurality of boundary points of the region to be explored overlapping the known region; and
determining a boundary point in an unexplored state as the first exploration point.

5. The map building method for the robot according to claim 1, further comprising:
based on there being a plurality of first exploration points in the region to be explored, sequentially connecting the plurality of first exploration points to acquire a connection line;
determining a first distance between each of the first exploration points and a center point of the connection line; and
determining a first exploration point corresponding to a smallest value of the first distance as the target point.

6. The map building method for the robot according to any one of claims 1 to 5, wherein after the step of collecting the map-building data of the region to be explored, the method further comprises:
updating the target point to be in an explored state.

7. The map building method for the robot according to any one of claims 1 to 5, further comprising:
controlling, during travelling of the robot toward the target point, the robot to travel along an outer edge of an obstacle to bypass the obstacle based on presence of the obstacle between the target point and a current position of the robot.

8. A map building device for a robot, comprising:
a control module configured to control the robot to travel toward a target point, wherein the target point is a first exploration point of a region to be explored, and the first exploration point is in an unexplored state;
a detection module configured to detect exploration point information corresponding to a preset range in which the target point is located during travelling of the robot toward the target point;
a processing module configured to process the target point according to the exploration point information; and
a map building module configured to collect, based on the robot travelling to the target point, map-building data of the region to be explored to update an environmental spatial map of the robot.

9. A robot, comprising a processor and a memory, wherein:
the memory is configured to store operation instructions; and
the processor is configured to perform following operations by invoking the operation instructions:
controlling the robot to travel toward a target point, wherein the target point is a first exploration point of a region to be explored, and the first exploration point is in an unexplored state;
detecting exploration point information corresponding to a preset range in which the target point is located during travelling of the robot toward the target point;
processing the target point according to the exploration point information; and
collecting, based on the robot travelling to the target point, map-building data of the region to be explored to update an environmental spatial map of the robot.

10. The robot according to claim 9, wherein the processor is further configured to perform following operations by invoking the operation instructions:
maintaining the target point based on the exploration point information being that a second exploration point exists within the preset range; and
updating the target point to the second exploration point based on the exploration point information being that no second exploration point exists within the preset range and the second exploration point exists outside the preset range,
wherein the second exploration point is a first exploration point other than the target point.

11. The robot according to claim 10, wherein the processor is further configured to perform following operations by invoking the operation instructions:
controlling the robot to stop traveling based on no second exploration point existing in the region to be explored; and
storing the environmental spatial map.

12. The robot according to claim 9, wherein the processor is further configured to perform following operations by invoking the operation instructions:
acquiring the environmental spatial map, wherein the environmental spatial map comprises a known region and/or a region to be explored, and the known region has corresponding map-building data;
extracting a plurality of boundary points of the region to be explored overlapping the known region; and
determining a boundary point in an unexplored state as the first exploration point.

13. The robot according to claim 9, wherein the processor is further configured to perform following operations by invoking the operation instructions:
based on there being a plurality of first exploration points in the region to be explored, sequentially connecting the plurality of first exploration points to acquire a connection line;
determining a first distance between each of the first exploration points and a center point of the connection line; and
determining a first exploration point corresponding to a smallest value of the first distance as the target point.

14. The robot according to any one of claims 9 to 13, wherein the processor is further configured to perform following operations by invoking the operation instructions:
updating the target point to be in an explored state.

15. The robot according to any one of claims 9 to 13, wherein the processor is further configured to perform following operations by invoking the operation instructions:
controlling, during travelling of the robot toward the target point, the robot to travel along an outer edge of an obstacle to bypass the obstacle based on presence of the obstacle between the target point and a current position of the robot.

16. A storage medium storing computer programs thereon, wherein when the computer programs are executed by a processor, following operations are implemented:
controlling a robot to travel toward a target point, wherein the target point is a first exploration point of a region to be explored, and the first exploration point is in an unexplored state;
detecting exploration point information corresponding to a preset range in which the target point is located during travelling of the robot toward the target point;
processing the target point according to the exploration point information; and
collecting, based on the robot travelling to the target point, map-building data of the region to be explored to update an environmental spatial map of the robot.

17. The storage medium according to claim 16, wherein when the computer programs are executed by the processor, following operations are implemented:
maintaining the target point based on the exploration point information being that a second exploration point exists within the preset range; and
updating the target point to the second exploration point based on the exploration point information being that no second exploration point exists within the preset range and the second exploration point exists outside the preset range,
wherein the second exploration point is a first exploration point other than the target point.

18. The storage medium according to claim 17, wherein when the computer programs are executed by the processor, following operations are implemented:
controlling the robot to stop traveling based on no second exploration point existing in the region to be explored; and
storing the environmental spatial map.

19. The storage medium according to claim 16, wherein when the computer programs are executed by the processor, following operations are implemented:
acquiring the environmental spatial map, wherein the environmental spatial map comprises a known region and/or a region to be explored, and the known region has corresponding map-building data;
extracting a plurality of boundary points of the region to be explored overlapping the known region; and
determining a boundary point in an unexplored state as the first exploration point.

20. The storage medium according to claim 16, wherein when the computer programs are executed by the processor, following operations are implemented:
based on there being a plurality of first exploration points in the region to be explored, sequentially connecting the plurality of first exploration points to acquire a connection line;
determining a first distance between each of the first exploration points and a center point of the connection line; and
determining a first exploration point corresponding to a smallest value of the first distance as the target point.

21. The storage medium according to any one of claims 16 to 20, wherein when the computer programs are executed by the processor, following operations are implemented:
updating the target point to be in an explored state.

22. The storage medium according to any one of claims 16 to 20, wherein when the computer programs are executed by the processor, following operations are implemented:
controlling, during travelling of the robot toward the target point, the robot to travel along an outer edge of an obstacle to bypass the obstacle based on presence of the obstacle between the target point and a current position of the robot.
